# EUROPEAN PATENT SPECIFICATION

(11) **EP 4 269 965 B1**
(45) Date of publication and mention of the grant of the patent: **09.04.2025**
(21) Application number: 23156422.0
(22) Date of filing: 13.02.2023
(51) Int. Cl.: G01J 9/02, G01J 11/00, G01J 9/00

(54) **SYSTEM AND METHOD FOR CHARACTERISING WEAK FEMTOSECOND PULSES AT A SINGLE PHOTON LEVEL USING SECOND-ORDER INTERFEROMETRY IN A TIME-FREQUENCY MODULATOR SYSTEM**
SYSTEM UND VERFAHREN ZUR CHARAKTERISIERUNG VON SCHWACHEN FEMTOSEKUNDENPULSEN AUF EINZELPHOTONEN-EBENE UNTER VERWENDUNG VON INTERFEROMETRIE ZWEITER ORDNUNG IN EINEM ZEIT-FREQUENZ-MODULATOR-SYSTEM
SYSTÈME ET MÉTHODE POUR CARACTÉRISER DE FAIBLES IMPULSIONS FEMTOSECONDES AU NIVEAU D'UN PHOTON UNIQUE EN UTILISANT L'INTERFÉROMÉTRIE DE SECOND ORDRE DANS UN SYSTÈME MODULATEUR TEMPS-FRÉQUENCE

(30) Priority: 30.04.2022 PL 44107422
(43) Date of publication of application: 01.11.2023
(73) Proprietor: Uniwersytet Warszawski, 00-927 Warszawa (PL)
(72) Inventor: Jastrzebski, Marcin, 02-746 Warszawa (PL); Kurzyna, Stanislaw, 05-070 Sulejowek (PL); Lipka, Michal, 05-082 Stare Babice (PL); Parniak-Niedojadlo, Michal, 03-976 Warszawa (PL); Wasilewski, Wojciech, 02-130 Warszawa (PL)
(74) Representative: JD&P Patent Attorneys Joanna Dargiewicz & Partners

(56) References cited:
- LAURA J WRIGHT ET AL: "Spectral shearing of quantum light pulses by electro-optic phase modulation", ARXIV.ORG, CORNELL UNIVERSITY LIBRARY, 201 OLIN LIBRARY CORNELL UNIVERSITY ITHACA, NY 14853, 2 May 2016 (2016-05-02), XP080698951
- FABRE N. ET AL: "Parameter estimation of time and frequency shifts with generalized Hong-Ou-Mandel interferometry", PHYSICAL REVIEW A, vol. 104, no. 2, 1 August 2021 (2021-08-01), XP093074967, ISSN: 2469-9926, DOI: 10.1103/PhysRevA.104.022208
- CHEN CHANGCHEN ET AL: "Single-photon frequency shifting with a quadrature phase-shift keying modulator", SCIENTIFIC REPORTS, vol. 11, no. 1, 11 January 2021 (2021-01-11), XP093075184, Retrieved from the Internet <URL:https://www.nature.com/articles/s41598-020-79511-8> DOI: 10.1038/s41598-020-79511-8
- KARPINSKI MICHAL ET AL: "Control and Measurement of Quantum Light Pulses for Quantum Information Science and Technology", ADVANCED QUANTUM TECHNOLOGIES, vol. 4, no. 9, 23 July 2021 (2021-07-23), pages 2000150, XP093075181, ISSN: 2511-9044, Retrieved from the Internet <URL:https://onlinelibrary.wiley.com/doi/full-xml/10.1002/qute.202000150> DOI: 10.1002/qute.202000150
- DAVIS ALEX O. C. ET AL: "Measuring the Single-Photon Temporal-Spectral Wave Function", PHYSICAL REVIEW LETTERS, vol. 121, no. 8, 1 August 2018 (2018-08-01), US, pages 1 - 6, XP093029531, ISSN: 0031-9007, Retrieved from the Internet <URL:https://link.aps.org/accepted/10.1103/PhysRevLett.121.083602> DOI: 10.1103/PhysRevLett.121.083602

## Description

### [Background of the invention]

The subject of the invention is a system and a related method of characterisation of weak femtosecond pulses using second order interferometry in a system with a time and frequency modulator. The method according to the invention is particularly significant in characterisation of femtosecond (1 fs = 1×10⁻¹⁵ second) pulses or optical pulses on the level of single photons.

### [Prior art]

There are spectroscopic methods known in the art, intended for measurements and characterisation of ultra-short optical pulses. The simplest method is based on an auto-correlator, in which an optical pulse is divided into two identical copies. One of the copies is delayed, and both copies are subsequently mixed in a non-linear medium, thus generating the second harmonic (SHG) in a non-collinear configuration. The SHG signal is measured using a photodiode, and its intensity corresponds to the intensity auto-correlation of the measured pulse for the initially set delay. No information about the pulse phase is obtained, however.

Another method is the spectral shearing interferometry, in which the optical pulse is divided into two copies, with one shifted in time, while the other - in the frequency domain. Both copies of the pulse are interfered together and the spectral characteristic on the output ports of the interferometer is then measured.

Another method is the electro-optic spectral shearing interferometry - a variation using an electro-optical modulator to shift the frequency of one of the two pulses. A spectrometer is connected to the interferometer output. A non-linear crystal is not significantly required, which allows the handling of very weak pulses (e.g. single photon states).

There are also more advanced characterisation methods used in the art with ultra-short optical pulses, including the approach based on non-linear spectrographic type methods (e.g. FROG) and interferometric methods (e.g. SPIDER).

For example, the ultra-fast transitional infrared absorption (frequency-resolved optical gating, FROG) is a method involving a measurement of the electric field of ultra-short light pulses based on a measurement of spectrally separated auto-correlation, followed by the field shape recreation using iteration algorithms. The scientific publication from 1993 [D. J. Kane and R. Trebino, "Characterization of arbitrary femtosecond pulses using frequency-resolved optical gating" in IEEE Journal of Quantum Electronics, vol. 29, no. 2, pp. 571-579, Feb. 1993, DOI: 10.1109/3.199311], presents a technique (FROG) used to characterise any femtosecond (1 fs = 10⁻¹⁵ s) laser pulses. The FROG method is relatively simple in practice, does not require complicated equipment, enables pulse characterisation in a wide spectral range and, what is equally important, and does not require a reference pulse. The FROG method measures the signal spectrum as a function of the delay between both input pulses.

The obtained intensity trace as a function of frequency and delay are related in the graphical spectrogram of the pulse. This results in a visual representation of the transformation, containing information regarding the time and frequency of the signals. It was also proven that phase reconstruction from a FROG trace results in full intensity I(t) and phase phi(t) or an arbitrary, ultra-short pulse without any physically significant ambivalence. The FROG technique is characterised by temporal resolution limited only by the reaction of the non-linear medium, the spectrometer resolution and the exact knowledge of the delay between both optical pulses. The method was demonstrated using own diffraction, through the electronic Kerr effect in the BK-7 and 620 nm glass, chirped linearly, pulses *ca*. 200 fs long and with a power of several µJ (microjoules).

Another characterisation method of ultra-short pulses is the SPIDER method (*spectral* phase *interferometry for direct electric-field reconstruction*). This is a measurement method for the electric field of ultra-short light pulses involving direct reconstruction of the phase derivative by pulse frequency. The scientific publication [C. laconis and I. A. Walmsley, "Self-referencing spectral interferometry for measuring ultrashort optical pulses," in IEEE Journal of Quantum Electronics, vol. 35, no. 4, pp. 501-509, April 1999, DOI: 10.1109/3.753654] discloses an interferometry method self-referencing to a measurement, dependent on the time, intensity and phase of ultra-short optical pulses. The technique, spectral phase interferometry for direct electric-field reconstruction (SPIDER) measures the interference between a pair of input pulse replica after spectral shearing. Direct (non-iterative) inversion of the interferogram results in the electric field of the input pulse without any ambivalence. The interferogram, which is only a frequency function, is obtained using a spectrometer and recorded using a slow detector. Moreover, the system geometry is fully collinear and does not require moving components. This paper describes in detail the principle of operation, equipment and calibration of the SPIDER method and provides experimental examples of reconstructed pulses.

The Chinese patent application of 2013 [CN103389164A] discloses an invention related to a method and a device for measurement of the width of attosecond (1 as = 1×10⁻¹⁸ second) pulses in the extreme ultraviolet range (namely wavelengths of 10-124 nm). This method includes the following steps: (i) adjustment of both arms of the Mach-Zehnder interferometer such that collinear transmission of super strong femtosecond pulse transmission synchronised by the detected attosecond pulses and by the phase of the carrier circumference; (ii) focussing of two optical fields at the same spatial point of a target; (iii) adjustment of the relative delay of the pumping light and of the probing light in order to obtain two-dimensional spectra of photoelectron energy; (iv) restoration of the time domain for attosecond pulses in extreme ultraviolet, which should be detected using an iterative algorithm in a FROG method (optical gating with frequency resolution) in order to obtain the pulse width. The method and the device provided by the invention may be used to detect attosecond pulses and in application studies on attosecond pulses and widths of the attosecond pulse in the extreme ultraviolet.

The scientific publication of 2018 [A. O. C. Davis,1 V. Thiel, M. Karpiński, and B. J. Smith, Physical Review Letters 121, 083602 (2018) DOI: https://doi.org/10.1103/PhysRevLett.121.083602] discloses the use of temporal-spectral light modes as the source of information regarding the fundamental laws of nature, quantum systems, as well as an information coding method. This publication discloses a method of precise temporal-spectral characterisation of the light state at the single photon level, which plays a crucial role in the understanding of sources of individual photons and their applications in the emerging, optical quantum technologies. An optical characterisation method without the use of a reference signal source was disclosed, which combines the ultra-fast metrology techniques and spectral detection of individual photons in order to characterise the temporal-spectral structure of pulsed, heralded single photons. This method is useful to obtain the characteristics of a single parameter. For example, a frequency shift may be set, when a temporal shifts can be modified and both interferometer outputs can be observed using a spectrometer, i.e. we can observe the intensity of individual spectral components of the interferometer signal.

Further examples of the prior art can be found in the articles "Spectral shearing of quantum light pulses by electro-optic phase modulation" of Laura J Wright et al., Physical Review Letters, 13.01.2017; "Parameter estimation of time and frequency shifts with generalized Hong-Ou-Mandel interferometry" of Fabre N. et al., Physical Review A, 01.08.2021; "Single-photon frequency shifting with a quadrature phase-shift keying modulator" of Chen Changchen et al., natureresearch, Scientific Reports, 11.01.2021; and "Control and Measurement of Quantum Light Pulses for Quantum Information Science and Technology", Karpinski M. et al., Advanced Quantum Technologies, 01.09.2021.

### [Problem from the prior art]

A problem known in the art is the precise characterisation of optical pulses, which generally requires dedicated solutions adapted to the specific scenario. This is related to the adaptation of the central pulse wavelength, the bandwidth and the power of the optical pulse. The technical problem to be solved also includes a characterisation method for ultra-short optical pulses in near-infrared (in the wavelength range of 800 nm - 2.5 µm). In other words, it determines the dependence of amplitude and phase on the optical pulse with the half-width in the picosecond range (1 ps = 1×10⁻¹² s). The spectral characteristics cannot be obtained for such short optical pulses through direct intensity measurement at the electromagnetic radiation detector (e.g. a photodiode), as the detector bandwidth is in the GHz range at best, translating into the duration of the optical pulse being in the nanosecond range (1 ns = 1×10⁻⁹ s). There are indirect methods of characterisation of such pulses, which also have their own limitations, in particular limiting their applicability in the near infrared range and for ultra-weak light states.

### [Vocabulary and definitions of terms known in the art and used in the disclosure]

Terms used in this disclosure have the following meanings, described in the definitions below:
Chirp means the dependence of the momentary frequency of the pulse on time (or separation of the spectral components of the pulse over time). Linear chirp (a linear function of time) is an equivalently square phase over time (a phase which is a quadratic function of time).

Dispersion means the dependence of the refraction index of the medium on the light wave frequency. One of the consequences of dispersion is the fact that light beams of various colours (wavelengths) hitting the media interface at a non-zero angle are refracted at different angles.

EOM means an electro-optic modulator, namely an optical device which uses a signal-controlled element with an electro-optic effect, modulating the light beam. The modulation may be applied to the phase, frequency, amplitude or polarisation of the light beam. Modulation bands reaching even the gigahertz (GHz) range are possible thanks to the use of laser-controlled modulators.

The "FROG" term means the ultra-fast transient infrared absorption method (frequency-resolved optical gating), which involves a measurement of the electric field of ultra-short light pulses based on a measurement of spectrally separated auto-correlation, followed by the field shape reconstruction using iteration algorithms.

The terms "optical pulse" and "light beam" are interchangeable.

The "HOM" term is an abbreviation of the Hong-Ou-Mandel surnames and describes the effect and the related interferometer design. The interferometer uses a two-photon interference effect in quantum optic, demonstrated for the first time in 1987 by three physicists from the University of Rochester: Chung Ki Hong, Zheyu Ou and Leonard Mandel (DOI: https://doi.org/10.1103/PhysRevLett.59.2044).

The "HWP" terms means a half-wave plate rotating polarisation by 45° (an abbreviation of Half Wave Plate).

Jitter means short-term deviations from the set, periodic signal characteristics. The deviation may apply to frequency, amplitude or phase of the given signal.

Nonlinear means a feature of an optical system characterised in that the input value of the signals is not directly proportional to the recorded input data.

"PBS" means dice or an element splitting the polarisation (an abbreviation of Polarizing Beam Splitter). Polarizer is an optical device transmitting light with specific polarisation.

"SHG" refers to second harmonic generation, which is a non-linear optical effect resulting in a 2ω frequency wave obtained from a wave with the frequency of ω.

"SPD" means a single photon detector, enabling the detection of an optical pulse at the output of the receiver system with high time frequency reaching hundreds of picoseconds. An avalanche photodiode is an example of the SPD.

The term "SPIDER" means a characterisation method for ultra-short pulses (after Spectral Phase Interferometry for Direct Electric-field Reconstruction), which is a measurement method for electric fields of ultra-short light pulses involving direct reconstruction of the phase derivative by the pulse frequency.

The "ultra-weak light state" is a light state, in which the average number of photons in a single coherent state is at the level of one photon or lower, in particular, in the case of pulses, the number of photons per pulse is at the level of one or less. The detection of such light states requires detectors with the sensitivity of a single photon.

The "QWP" term means a quarter wave plate, after passing through which light may change its polarisation. Along the distance equal to the plate thickness, light with polarisation following the direction of the fast axis is ahead of the light with polarisation direction conforming to the slow axis direction by a quarter of the wave (an abbreviation of Quarter-Wave Plate).

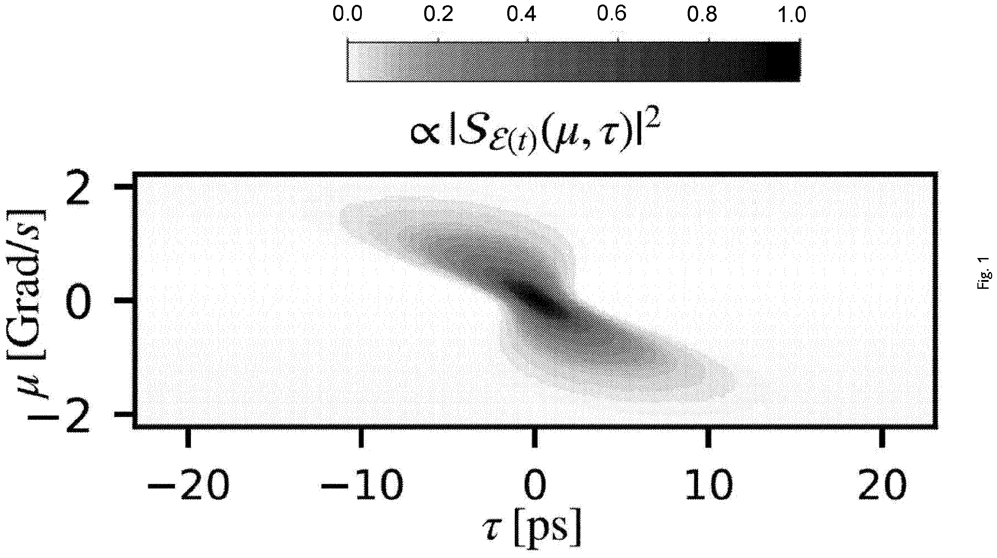

The frequency domain shift is determined using the µ unit [Grad/s], which is equal to gigaradians per second or 2π×10⁹ / second or 2π×GHz. In other words, frequency expressed in GHz (gigahertz) is multiplied by 2π. This leads to a conclusion that Fig. 1 uses circular frequency understood as µ [Grad/s], which is a frequency shift or a linear phase over time Grad/s = 2π×10⁹ / second, which is a linear phase over time.

Other terms not defined above and used in the document have the meanings provided and understood by a specialist in the art according to their best knowledge, this disclosure and the context of the patent application.

### [Solution to the problem of the prior art]

The invention disclosed in this patent document includes a novel design of the device and an innovative characterisation method for ultra-short optical pulses. The invention disclosed in this disclosure includes a system and a method implemented using a system, which is a variation of electro-optic spectral shearing interferometry, in which a photodiode or a detector with sensitivity adequate to record single photons is used at the interferometer output instead of a spectrometer. In exchange, a series of measurement must be performed, with not only time delay of the pulse being varied, but also the frequency shift. An advantage of the system and of the method is the fact that they do not require the use of an expensive spectrophotometer, thus they significantly lower the measurement costs and enable the measurement of extremely weak light states, e.g. single photons over the entire near infrared range (pulses in the range of 0.8 to 2.5 µm), where easy and efficient execution of measurements using a spectrometer sensitive to single photons is not possible. The known characterisation methods for ultra-short impulses are known in the art for the spectral range commonly used in telecommunication, namely around 1500 nm.

### [Disclosure of the invention]

The subject of the invention is a system used to characterise weak femtosecond pulses on the level of individual photons using second order interferometry as defined in claim 1.

The subject of the invention also includes a method of determination of the spectral width and of the duration of a weak femtosecond pulse on the single photon level using second order interferometry as defined in claim 5.

The subject of the invention also includes a computer product as defined in claim 7.

Preferred embodiments are indicated in the dependent claims.

### [Advantages of the invention]

The invention according to this patent disclosure has numerous advantages. The system and the method enables the characterisation of ultra-fast (at the femtosecond level) and ultra-weak (at the single photon level) optical pulses. The proposed system according to the invention has a simple design and does not require the use of an expensive spectrometer. Another equally important issue, is the fact that the system according to the invention and the associated method do not require the use of any unique algorithms, and moreover, the algorithms used in it are known from prior applications in radar technologies.

### [Preferred embodiments of the invention]

The invention will now be closer presented in its embodiments, in reference to the attached drawing, in the figures of which the dotted lines connecting individual elements of the system denote optical connections (e.g. optical fibre, wave guide or an light beam in free space), while continuous lines connecting individual elements of the system designate electrical connections, in which it is disclosed:
Fig. 1 presents the profile of the second order cohesion function versus shifts in the time and frequency domains. The Figure presents the scale in the time domain (τ [ps]), in the frequency domain (*µ* [Grad/s]) and the value of the second order coherence function (∝ |S_{ε(t)} (*µ*, *τ*)|²).
Fig. 2 presents a detailed and complete diagram of the used experimental system according to the invention.
Fig. 3 presents the experimental diagram representing only a part of the system in Fig. 2, related to the pulse shift both in the time and the frequency domain.
Fig. 4 presents the experimental diagram representing only a part of the system in Fig. 2, related to the Hong-Ou-Mandel (HOM) interferometer.
Fig. 5 presents the experimental diagram representing only a part of the system in Fig. 2, related to a part of the configuration using radio frequencies (RF) for an electro-optic modulator (EOM) and a delaying line.

The figures of the drawing use designations according to dictionary definitions. There are various types of optical and photonic connections known in the art, e.g. optical fibre, wave guide or light beam in free space, which are designated in the figures with a continuous line. A bold continuous line designates in the figure electric connections (14), including wired connections and digital signal inputs.

### [Example embodiments of the invention]

The embodiment of the invention presented below is provided only to illustrate the invention and explain its individual aspects and not to limit the invention and should not be equated to the entire protection scope of the invention, which is defined in the attached patent claims. Unless indicated otherwise, the embodiment disclosed below uses standard materials and methods used in the art or follows the recommendations of manufacturers for specific devices, materials and methods.

### EXAMPLE EMBODIMENT OF THE INVENTION

**An experimental system implementing the method according to the invention to shift the pulse both in the time and frequency domains.**

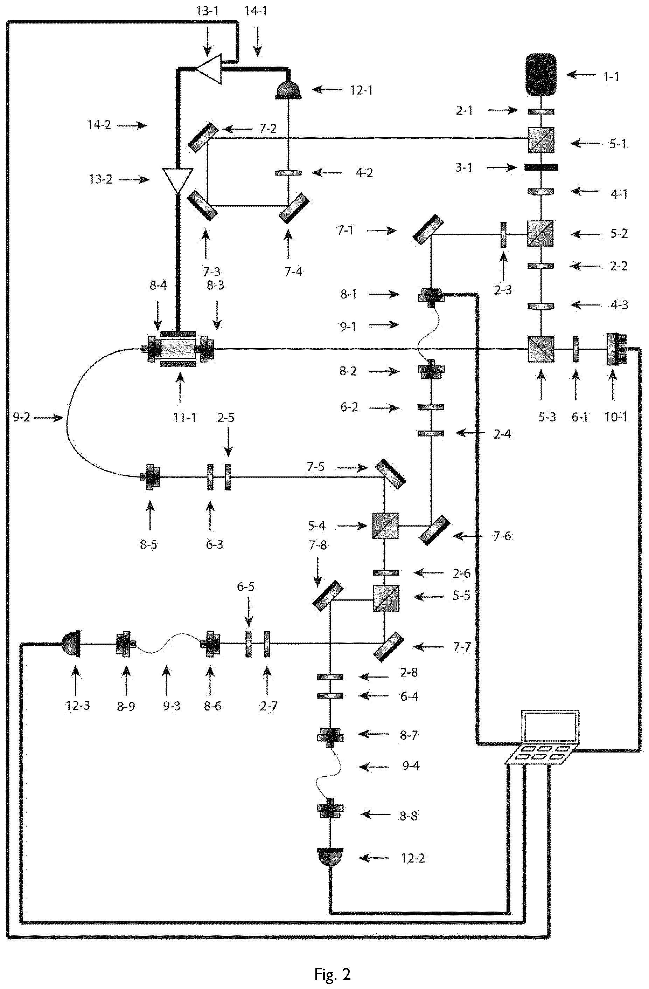

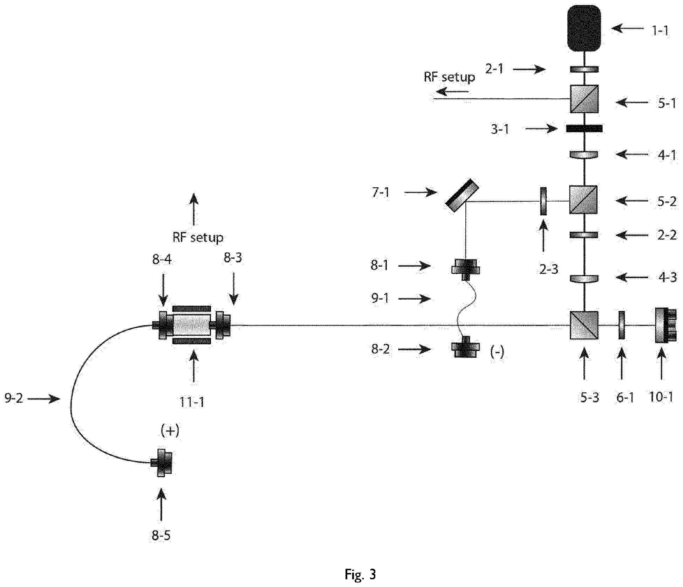

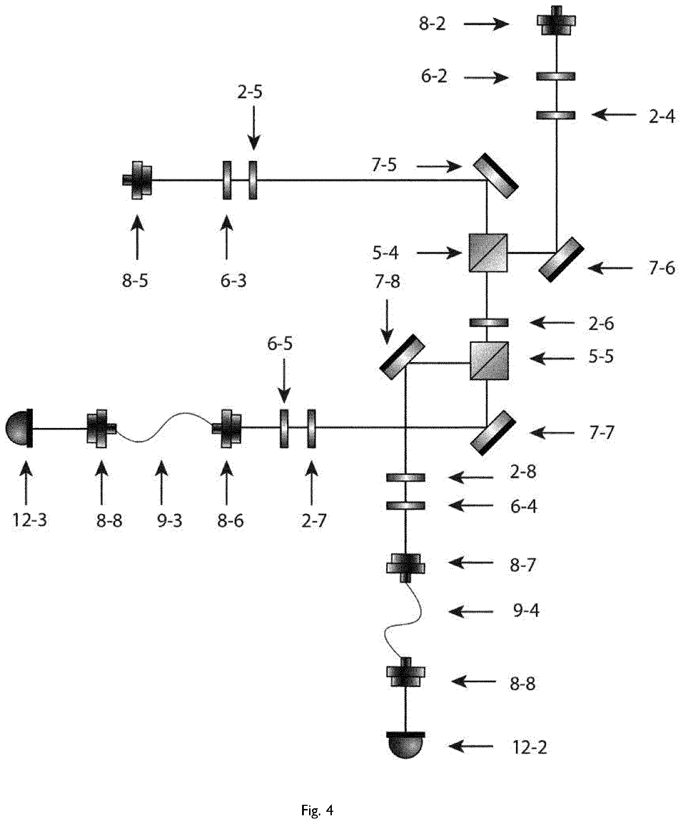

The experimental system disclosed in this embodiment and presented in Fig. 2, 3, 4 and 5 consists of the following elements: 1 - femtosecond laser; 2 - half wave plate (HWP); 3 - spectral filter narrowing the spectrum; 4 - lens; 5 - polarizing beam splitters (PBS); 6 - quarter wave plate (QWP); 7 - mirror; 8 - collimator; 9 - optical fibre; 10 - piezoelectric mirror; 11 - electro-optic phase modulator; 12 - detector, preferably a SPD-type detector; 13 - RF amplifiers; 14 - RF cables.

In this experimental system, an attenuated light beam/pulse is emitted by the laser 1-1 and, after passing through the optical path, enters the first half wave plate 2-1, which enables the adjustment of a part of the light beam on the polarizing beam splitter (PBS) 5-1. The first PBS plate 5-1 reflects a part of the light beam and directs it to the first branch of the system, while the second part of the light beam is transmitted and directed to the second branch of the system according to the invention.

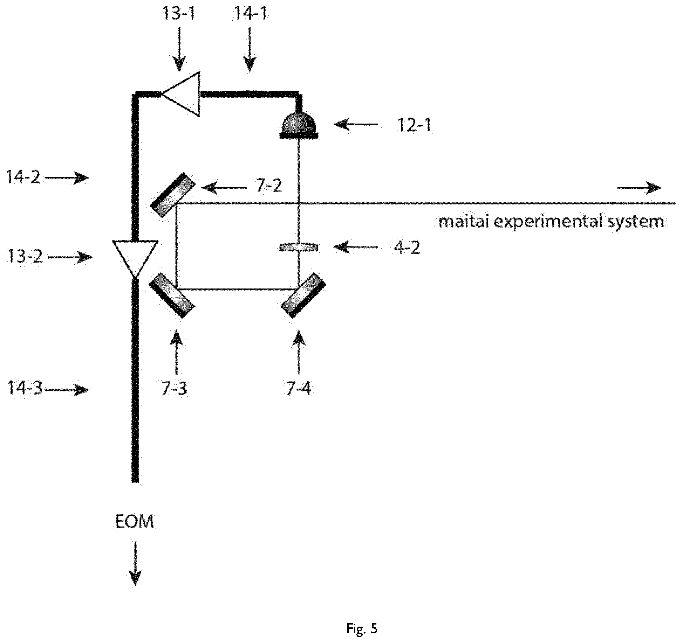

An optical pulse reflected at the first PBS 5-1 is directed to the first branch of the system (which is presented in detail in Fig. 5), and reaches the delaying line consisting of a set of mirrors 7. In a preferable variant disclosed in this embodiment, the delaying line includes three mirrors (7-2, 7-3, 7-4), the light beam preferably passes through the optical lens 4-2 (focal distance at 50 mm - focussing lens) before being recorded at the detector 12-1 (preferably a photodiode). Next, the electrical signal from the photodiode is amplified at the pre-amplifiers and the RF amplifier 13-1, and fed to the electro-optic phase modulator (EOM) 11-1. Thus, the electro-optic phase modulator (EOM) 11-1 receives the signal from the detector 12-1, which was additionally amplified by the pre-amplifiers and RF amplifiers 13-1. The RF signal must be synchronised with the laser pulse entering the modulator - the adequate length of electric cables and the position of the delaying line are selected.

At the same time, the transmitted light beam by the PBS 5-1 is directed to the second branch of the system. This light beam is first directed via the optical path to the spectral filter 3-1 narrowing the spectrum (in this case, this is 800 +/- 0.3 nm), and next, through the optical path, the light beam reaches the lens 4-1 (focal distance at 150 mm - focussing lens), and next to the other PBS plate 5-3 dividing the beam into two new light beams.

The light beam reflected at the PBS plate 5-2 passes through the half wave plate 2-3, which is reflected from the mirror 7-1 and passes through the light beam, reaching the collimator 8-1. The collimator 8-1 is attached to a mobile table actuated by a step motor (both these elements are not shown in the Figures), the position of which is adjusted using the control module of the computer. This control over the collimator position is used to shift the pulse in this arm of the interferometer, responsible for the time domain. This design gives a technical effect enabling the system to be adjusted in the time domain. Additionally, the RF amplifier 13-1, the piezoelectric mirror 10-1, single photon detectors 12-2 and 12-3 and the collimator 8-1 are placed on the table actuated using a step motor electrically connected to a computer control module (comp).

The light beam transmitted by the PBS 5-2 passes through the optical path and reaches the half wave plate 2-2 and the lens 4-3 (focal distance 200 mm - focussing lens). The half wave plate 2-2 is set such that the entire light beam is reflected from the next PBS plate 5-3 and directed through the optical path to the quarter wave plate 6-1 and the piezoelectric mirror 10-1. The piezoelectric mirror 10-1 oscillates slightly forwards and backwards with a frequency of 50 Hz - this facilitates phase averaging and enables the measurements to be performed faster. The two passages of an light beam through the quarter wave plate 6-1 (QWP) results in a light polarisation rotation by 90°, which means that the light beam reflected from the piezoelectric mirror is fully transmitted through the PBS plate 5-3 and to the collimator 8-3 and the EOM modulator 11-1. The light beam passes through the optical path and reaches the EOM 11-1 where it meets the aforementioned RF signal. The RF signal is approximately linear and results in a pulse shift in the frequency domain including the shift in the frequency domain.

*Description* of *the invention in a system according to the invention, including an Hong-Ou-Mandel interferometer.*

To one arm of a constructed Hong-Ou-Mandel interferometer, an optical pulse shifted in the time domain enters the optical path (on the side of the mirror 7-6), and to the other arm of the interferometer, an optical pulse shifted in the frequency domain (on the side of the mirror 7-5). Both beams enter the HOM interferometers via optical paths, through the collimators 8 (collimator 8-5 for the frequency domain input of the interferometer, while collimator 8-2 for the time domain input of the interferometer), pass through the quarter wave plate (QWP) 6 (respectively, 6-3 for the frequency domain an 6-2 for the time domain), the half wave plate (HWP) 2 (respectively, 2-5 for the frequency domain and 2-4 for the time domain) and are reflected from the mirror 7 (respectively, 7-5 for the frequency domain and 7-6 for the time domain) to meet at the PBS plate 5-4. Both polarisations of both light beams entering the PBS 5-4 through the light beams are set such that they pass the PBS straight ahead. Next, both light beams pass the same light beam and impact the half wave plate 2-6 and the next PBS 5-4, where the light beam is divided again. The half wave plate 2-6 is set at an angle ensuring the required polarisation rotation of the light beam, such that each of the two input pulses is divided at the PBS 5-5 in the same power ratio. The correct geometric setup of optical elements of the system is required (wave plates, mirrors, PBSs and collimators). No interference is observed with an incorrect setup of these elements, and thus, incorrect configuration of the interferometer as a whole. The configuration of the system according to the invention enables the optical pulses combined at the PBS plate 5-4 (and then divided at the PBS plate 5-5) to be in the same frequency mode and in the same time mode in the case of pulses entering the interferometer at the same time. Both beams exiting the PBS plate 5-5 via optical paths are reflected from the mirrors (7-7 and 7-8) and then use the appropriate optical path to pass through the half wave plate (2-7 or, respectively, 2-8) and the quarter wave plate (6-5 or, respectively, 6-4) and reach the collimators (8-6 and 8-8 or, respectively, 8-7 and 8-8), and then use the optical paths to reach the detectors (12-3 or, respectively, 12-2). The detection (detectors 12-2 and 12-3 are preferably single photon detectors) uses superconducting single-photon detectors - SSPD.

To summarise and by comparing this method with methods known in the art, this system and method according to the invention enables both the shift change of the optical pulse in the time and in the frequency domains. In exchange, there is no need to perform measurements of spectral component intensity at the output, and thus the use of an expensive spectrometer is not required, which is a significant simplification of the design and a decrease of construction costs of the measuring device. The system according to the invention presents a two dimensional (2D) map as a measurement result, which requires a specific algorithm for the reconstruction of the electric field of the pulse. The system according to invention implements the algorithm known from the modern radar art (https://doi.org/10.48550/arXiv.2201.11384) and which may be used in this system and method according to the invention. The system according to the invention implementing this method is equipped with a control module (designated in Fig. 2 as a computer) to implement the execution of the auto-correlation function determined in the interferometric system with a time and frequency modulator.

*This method without the use of a spectrometer is advantageous,* as measurements using a spectrometer with sensitivity at the level of single photon is extremely difficult in the near infrared area (e.g. 800 nm). On the other hand, the biggest advantage of electro-optic spectral shearing interferometry in general is exactly the fact that compared to SPIDER or FROG, it works well with very weak light (single photons and short light pulses). Contrary to the FROG or SPIDER methods, the method according to the invention does not require the examination of light pulses to participate in a non-linear process (the efficiency of which is very low for the low intensity of an optical pulse).

***It is worth to point out why a spectrometer sensitive* to *single photons is difficult* to *use in the wavelength range corresponding to 800 nm.***

The previously known method used in the art (https://doi.org/10.1103/PhysRevLett.121.083602) was developed for a light wavelength (for telecom - *ca*. 1550 nm), and the method based on optical fibre Bragg gratings (https://en.wikipedia.org/wiki/Fiber_Bragg_grating) and superconductive single photon detectors with time resolution (namely, wavelength conversion to the time at which the signal arrives at the detector). Optical fibre Bragg gratings do not ensure the adequate dispersion (namely, wavelength separation over time), required to achieve the spectrometer resolution good enough to implement the method known in the art for a wavelength of 800 nm or similar. The problem discussed here is technical in nature and not a fundamental science problem, as the use of this method in near infrared would require Bragg gratings with higher dispersion or detectors with smaller jitter.

### Technical effects of the invention

The system and the related method according to the invention works with shorter wavelengths than the methods previously known in the art. Thanks to the use of the method according to the invention, it is possible to simultaneously measure a pulse with intensity of several photons, it may thus be used to characterise light in this region. Other known methods (including DOI: https://doi.org/10.1103/PhysRevLett.121.083602), are designed for and work with wavelengths used in telecommunication (telecom - *ca*. 1550 nm), thus the known methods work only in this spectral area. In addition, the previously known methods were designed for measurements performed with a fixed (non-adjusted) shift in the frequency and/or time domains. This invention enables the shift in the frequency and/or time domain to be adjusted. In addition, the invention described here presents a two dimensional (2D) map as a measurement result, which requires a specific algorithm for the reconstruction of the electric field of the pulse. This algorithm is known from the modern radar technique (DOI: https://doi.org/10.48550/arXiv.2201.1138). On the other hand, the method known in the art (DOI: https://doi.org/10.1103/PhysRevLett.121.083602) requires the use of the algorithm described in the aforementioned scientific publication to reconstruct the pulse.

Because of the reconstruction method of the optical pulse, both methods are characterised in different measurement sensitivity levels, depending on the equipment conditions and the characteristics of the studied optical signal.

### [Potential areas of application of the invention]

This invention is used i.e. in technical areas related to (i) classical optics - to characterise ultra-fast optical pulses, (ii) quantum optics - to characterise ultra-fast optical pulses on the single photon level, including pulses with non-classical light statistics, e.g. single photons, (iii) photonics - to characterise photonic structure using ultrafast optical pulses, (iv) non-linear optics - to characterise the non-linear effects through the measurement of their impact on the shape of the ultra-fast optical pulse and (v) non-invasive spectroscopy - to characterise delicate samples of matter through their interactions with ultra-fast and ultra-weak optical pulses.

### Acknowledgements

*The inventors would like to acknowledge the Quantum Optical Technologies unit (QOT, project no. MAB*/*2018*/*4) at the University of Warsaw, which is implemented as a part of the International Research Agendas programme of the Foundation for Polish Science and co-funded from the funds of the European Union for the Smart Development Operational Programme (priority axis IV, activity 4.3.).*

## Claims

1. A system for characterisation of weak femtosecond pulses on the single photon level using second order interferometry, system comprising a time and frequency modulator and an Hong-Ou-Mandel interferometer system, and containing an optical path having a first polarisation beam splitter (5-1) dividing the light beam into two light beams defining two branches, the first branch and the second branch, through which the light beams pass, wherein
the first branch includes a detector (12-1), the signal of which being processed by a RF amplifier (13-1) and a pre-amplifier (13-2), which provide a modulating signal controlling an electro-optic modulator (11-1), and
the second branch includes a controlled delaying system and is connected to a first (12-2) and a second (12-3) detector in an Hong-Ou-Mandel interferometer system, wherein
the first (12-2) and the second (12-3) detector are electrically connected to the inputs of a signal processing system adapted to generate a controlling signal for the delaying system, generate a controlling signal for the system shaping the modulating signal, and determine a second order correlation function on the basis of signals recorded from the first (12-2) and the second detector (12-3), and
the second branch of the system includes a controlled delaying system, which contains the following optical elements, connected individually to one another by optical path:
- a spectral filter narrowing the spectrum (3-1),
- a lens (4-1),
- a second polarisation beam splitter (5-2), which is connected on one side, through an optical path, with a half wave plate (2-3), followed by a mirror (7-1) and a collimator (8-1), followed by an optical path leading to the Hong-Ou-Mandel interferometer, while on the other side, the second polarisation beam splitter (5-2) is connected, through an optical path, to a half wave plate (2-2), a lens (4-3) and a third polarisation beam splitter (5-3), wherein the third polarisation beam splitter (5-3) directs the incoming light toward a quarter wave plate (6-1) and a piezoelectric mirror (10-1), while transmitting the light reflected by said piezoelectric mirror (10-1) towards the electro-optic phase modulator (11-1), and
- a collimator (8-1), wherein the collimator (8-1) is placed on a table actuated by a step motor electrically connected to the computer control module (comp), and modulates the optical signal in the time domain, and is followed by an optical path leading to the Hong-Ou-Mandel interferometer,
and the second branch of the system further includes the Hong-Ou-Mandel interferometer, one arm of which is connected through an optical path with the electro-optic phase modulator (11-1), where the optical signal is modulated in the frequency domain, while the other arm of the Hong-Ou-Mandel interferometer is connected to the collimator (8-1), wherein both arms of the interferometer combine at a fourth polarisation beam splitter (5-4), and are divided at a fifth polarisation beam splitter (5-5) in two beams, which are detected by the first (12-2) and the second (12-3) detectors consisting in single photon or photodiodes.

2. The system according to claim 1, **characterised in that** the modulating signal controlling the electro-optic modulator is shaped by the profile obtained as a result of detection of the measured pulse at the detector (12-1) of the first branch and subsequent processing of the received signal using a controlled system, and wherein the first branch contains a photodiode as the detector (12-1) and a sub-system including a set of mirrors (7) and at least one lens (4).

3. The system according to claim 1 or 2, **characterised in that** between the fifth polarisation beam splitter (5-5) and the two single photo detectors or photodiodes (12-2 and 12-3), each of the two optical paths includes, sequentially, a half wave plate (2-7 and 2-8), a quarter wave plate (6-4 and 6-5), a first collimator (8-6 and 8-7), an optical fibre (9-3 and 9-4), a second collimator (8-8 and 8-9) and a detector (12-2 and 12-3).

4. The system according to any of the claims 1-3, **characterised in that** the RF amplifier (13-1), the piezoelectric mirror (10-1), the single photon detectors (12-2) and (12-3) are electrically connected with a computer control module (comp).

5. A method of determination of the spectral width and of the duration of a weak femtosecond pulse on the single photon level using second order interferometry in a system as defined in any of the claims 1-4, wherein the weak femtosecond signal is divided into two copies, shifting against each other over time and frequency and subsequently overlapped, thus obtaining a two-dimensional map, which is a result of pulse auto-correlation and which is used to read the spectral width and the duration of the pulse.

6. The method according to any of the claims 5, **characterised in that** it includes the determination of the pulse auto-correlation function **characterised in that** the pulse auto-correlation is determined in the (ω, τ) plane by shifting pulse copies against each other over time and frequency to obtain a two variable correlation function used to read the spectral width and the duration of the pulse.

7. A computer product **characterised in that** it includes instructions which, once uploaded to the system of any of the claims 1-4, implement the method defined in claims 5-6.

## Patentansprüche

1. Ein System zur Charakterisierung schwacher Femtosekundenimpulse auf Einzelphotonenniveau unter Verwendung von Interferometrie zweiter Ordnung, wobei das System einen Zeit- und Frequenzmodulator und ein Hong-Ou-Mandel-Interferometersystem umfasst und einen optischen Pfad mit einem ersten Polarisationsstrahlteiler (5-1) enthält, der den Lichtstrahl in zwei Lichtstrahlen teilt, die zwei Zweige definieren, den ersten Zweig und den zweiten Zweig, durch die die Lichtstrahlen verlaufen, wobei
der erste Zweig einen Detektor (12-1) umfasst, dessen Signal von einem RF-Verstärker (13-1) und einem Vorverstärker (13-2) verarbeitet wird, welche ein Modulationssignal bereitstellen, das einen elektrooptischen Modulator (11-1) steuert, und
der zweite Zweig ein gesteuertes Verzögerungssystem umfasst und mit einem ersten (12-2) und einem zweiten (12-3) Detektor in einem Hong-Ou-Mandel-Interferometersystem verbunden ist, wobei
der erste (12-2) und der zweite (12-3) Detektor elektrisch mit den Eingängen eines Signalverarbeitungssystem verbunden sind, das so angepasst ist, dass es ein Steuerungssignal für das Verzögerungssystem erzeugt, ein Steuerungssignal für das System erzeugt, das das Modulationssignal formt und das eine Korrelationsfunktion zweiter Ordnung auf der Grundlage von Signalen bestimmt, die vom ersten (12-2) und vom zweiten Detektor (12-3) aufgezeichnet wurden, und
der zweite Zweig des Systems ein gesteuertes Verzögerungssystem umfasst, das die folgenden optischen Elemente umfasst, die einzeln über einen optischen Pfad miteinander verbunden sind:
- ein Spektralfilter, das das Spektrum verengt (3-1),
- eine Linse (4-1),
- einen zweiten Polarisationsstrahlteiler (5-2), der auf einer Seite über einen optischen Pfad mit einer Halbwellenplatte (2-3) verbunden ist, gefolgt von einem Spiegel (7-1) und einem Kollimator (8-1), gefolgt von einem optischen Pfad, der zum Hong-Ou-Mandel-Interferometer führt, wohingegen der zweite Polarisationsstrahlteiler (5-2) auf der anderen Seite über einen optischen Pfad mit einer Halbwellenplatte (2-2), einer Linse (4-3) und einem dritten Polarisationsstrahlteiler (5-3) verbunden ist, wobei der dritte Polarisationsstrahlleiter (5-3) das einfallende Licht zu einer Viertelwellenplatte (6-1) und einem piezoelektrischen Spiegel (10-1) leitet, während das von dem piezoelektrischen Spiegel (10-1) reflektierte Licht zu dem elektrooptischen Phasenmodulator (11-1) übertragen wird, und
- ein Kollimator (8-1), wobei der der Kollimator (8-1) auf einem Tisch angeordnet ist, der von einem Schrittmotor angetrieben ist, der elektrisch mit dem Computersteuerungsmodul (comp) verbunden ist, und das optische Signal im Zeitbereich moduliert, und dem ein optischer Pfad folgt, der zum Hong-Ou-Mandel-Interferometer führt,
und wobei der zweite Zweig des Systems zusätzlich den Hong-Ou-Mandel-Interferometer umfasst, dessen einer Arm über einen optischen Pfad mit dem elektrooptischen Phasenmodulator (11-1) verbunden ist, wo das optische Signal im Frequenzbereich moduliert wird, wohingegen der andere Arm des Hong-Ou-Mandel-Interferometers mit dem Kollimator (8-1) verbunden ist, wobei beide Arme des Interferometers an einem vierten Polarisationsstrahlteiler (5-4) zusammengeführt werden, und werden an einem fünften Polarisationsstrahlenteiler (5-5) in zwei Strahlen aufgeteilt die von dem ersten (12-2) und dem zweiten (12-3) Detektor erfasst werden, die aus Einzelphotonendetektoren oder Photodioden bestehen.

2. System gemäß Anspruch 1, **dadurch gekennzeichnet, dass** das den elektrooptischen Modulator steuernde Modulationssignal durch das Profil geformt wird, das als Ergebnis des Erfassens des gemessenen Impulses am Detektor (12-1) des ersten Zweigs und der anschließenden Verarbeitung des empfangenen Signals unter Verwendung eines gesteuerten Systems erhalten wird, und wobei der erste Zweig eine Photodiode als Detektor (12-1) und ein Teilsystem mit einer Gruppe von Spiegeln (7) und mindestens einer Linse (4) umfasst.

3. System gemäß Anspruch 1 oder 2, **dadurch gekennzeichnet, dass** zwischen dem fünften Polarisationsstrahlteiler (5-5) und den zwei Einzelphotonendetektoren oder Photodioden (12-2 und 12-3) jeder der zwei optischen Pfade nacheinander eine Halbwellenplatte (2-7 und 2-8), eine Viertelwellenplatte (6-4 und 6-5), einen ersten Kollimator (8-6 und 8-7), eine optische Faser (9-3 und 9-4), einen zweiten Kollimator (8-8 und 8-9) und einen Detektor (12-2 und 12-3) umfasst.

4. System gemäß einem der Ansprüche 1 bis 3, **dadurch gekennzeichnet, dass** der RF-Verstärker (13-1), der piezoelektrische Spiegel (10-1), die Einzelphotonendetektoren (12-2) und (12-3) elektrisch mit einem Computersteuerungsmodul (comp) verbunden sind.

5. Verfahren zur Bestimmung der spektralen Breite und der Dauer eines schwachen Femtosekundenimpuls auf Einzelphotonenniveau unter Verwendung von Interferometrie zweiter Ordnung in einem System, wie in einem der Anspruche 1 bis 4 definiert, wobei das schwache Femtosekundensignal in zwei Kopien aufgeteilt wird, die sich über Zeit und Frequenz gegeneinander verschieben und anschließend überlappen, wodurch eine zweidimensionale Karte der resultierenden Impulsautokorrelation entsteht und die verwendet wird, um die spektrale Breite und die Impulsdauer abzulesen.

6. Verfahren gemäß Anspruch 5, **dadurch gekennzeichnet, dass** es die Bestimmung der Impulsautokorrelationsfunktion umfasst, und dass die Impulsautokorrelation in der (ω, τ) - Ebene durch zeitliches und frequenzmäßiges Verschieben von Impulskopien gegeneinander bestimmt wird, um eine Korrelationsfunktion mit zwei Variablen zu erhalten, die zum Erhalten der spektralen Breite und Impulsdauer werden wird.

7. Computerprodukt, **dadurch gekennzeichnet, dass** es Anweisungen umfasst, die nach dem Hochladen in das System gemäß einem der Ansprüche 1 bis 4 das in den Ansprüchen 5 bis 6 definierte Verfahren implementieren.

## Revendications

1. Système pour caractériser de faibles impulsions femtosecondes au niveau d'un photon unique en utilisant l'interférométrie de second ordre, le système comprenant un modulateur temps-fréquence et un système interférométrique Hong-Ou-Mandel, et contenant un chemin optique avec un premier diviseur de faisceau polarisant (5-1) divisant le faisceau lumineux en deux faisceaux lumineux définissant deux branches, la première branche et la seconde branche, à travers lesquelles passent les faisceaux lumineux, dans lequel
la première branche comprend un détecteur (12-1) dont le signal est traité par un amplificateur RF (13-1) et un préamplificateur (13-2), qui fournissent un signal de modulation commandant un modulateur électro-optique (11-1), et
la deuxième branche comprend un système de retardement contrôlé et est connectée à un premier (12-2) et à un deuxième (12-3) détecteur dans un système d'interféromètre Hong-Ou-Mandel,
dans lequel
le premier (12-2) et le second (12-3) détecteurs sont connectés électriquement aux entrées d'un système de traitement des signaux adapté pour générer un signal de commande pour le système de retardement, générer un signal de commande pour le système de mise en forme du signal modulant, et pour déterminer une fonction de corrélation de second ordre sur la base des signaux enregistrés par le premier (12-2) et le second détecteur (12-3), et
la deuxième branche du système comprend un système de retardement contrôlé, qui contient les éléments optiques suivants, reliés individuellement les uns aux autres par un chemin optique :
- un filtre spectral rétrécissant le spectre (3-1),
- une lentille (4-1),
- un deuxième diviseur de faisceau polarisant (5-2), qui est connecté d'un côté, par un chemin optique, à une lame demi-onde (2-3), suivie d'un miroir (7-1) et d'un collimateur (8-1), suivis d'un chemin optique menant à l'interféromètre de Hong-Ou-Mandel, tandis que de l'autre côté, le deuxième diviseur de faisceau polarisant (5-2) est connecté, par un chemin optique, à une lame demi-onde (2-2), à une lentille (4-3) et à un troisième diviseur de faisceau polarisant (5-3), dans lequel le troisième diviseur de faisceau polarisant (5-3) dirige la lumière entrante vers une lame quart d'onde (6-1) et un miroir piézoélectrique (10-1), tout en transmettant la lumière réfléchie par ledit miroir piézoélectrique (10-1) vers le modulateur de phase électro-optique (11-1), et
- un collimateur (8-1), dans lequel le collimateur (8-1) est placé sur une table actionnée par un moteur pas à pas connecté électriquement au module de commande informatique (comp), et module le signal optique dans le domaine temporel, et est suivi par un chemin optique menant à l'interféromètre de Hong-Ou-Mandel,
et la deuxième branche du système comprend en outre l'interféromètre de Hong-Ou-Mandel, dont un bras est relié par un chemin optique au modulateur de phase électro-optique (11-1), où le signal optique est modulé dans le domaine des fréquences, tandis que l'autre bras de l'interféromètre de Hong-Ou-Mandel est relié au collimateur (8-1), dans lequel les deux bras de l'interféromètre se combinent au niveau d'un quatrième diviseur de faisceau polarisant (5-4) et sont divisés au niveau d'un cinquième diviseur de faisceau polarisant (5-5) en deux faisceaux, qui sont détectés par le premier (12-2) et le second (12-3) détecteurs constitués d'un photon unique ou de photodiodes.

2. Le système selon la revendication 1, **caractérisé en ce que** le signal de modulation contrôlant le modulateur électro-optique est formé par le profil obtenu à la suite de la détection de l'impulsion mesurée au niveau du détecteur (12-1) de la première branche et du traitement ultérieur du signal reçu à l'aide d'un système contrôlé, et dans lequel la première branche contient une photodiode en tant que détecteur (12-1) et un sous-système comprenant un ensemble de miroirs (7) et au moins une lentille (4).

3. Le système selon la revendication 1 ou 2, **caractérisé par le fait qu'**entre le cinquième séparateur de faisceau de polarisation (5-5) et les deux photodétecteurs ou photodiodes simples (12-2 et 12-3), chacun des deux chemins optiques comprend, séquentiellement, une lame demi-onde (2-7 et 2-8), une lame quart d'onde (6-4 et 6-5), un premier collimateur (8-6 et 8-7), une fibre optique (9-3 et 9-4), un deuxième collimateur (8-8 et 8-9) et un détecteur (12-2 et 12-3).

4. Le système selon l'une des revendications 1 à 3, **caractérisé par le fait que** l'amplificateur RF (13-1), le miroir piézoélectrique (10-1), les détecteurs de photon unique (12-2) et (12-3) sont reliés électriquement à un module de commande informatique (comp).

5. Méthode de détermination de la largeur spectrale et de la durée d'une faible impulsion femtoseconde au niveau d'un photon unique, utilisant l'interférométrie du second ordre dans un système tel que défini dans l'une des revendications 1 à 4, dans laquelle le signal femtoseconde faible est divisé en deux copies, décalées l'une par rapport à l'autre dans le temps et la fréquence, puis superposées, ce qui permet d'obtenir une carte bidimensionnelle résultant de l'autocorrélation des impulsions et utilisée pour lire la largeur spectrale et la durée de l'impulsion.

6. La méthode selon la revendication 5, **caractérisée en ce qu'**elle comprend la détermination de la fonction d'autocorrélation d'impulsion **caractérisée en ce que** l'autocorrélation d'impulsion est déterminée dans le plan (ω, τ) en décalant les copies d'impulsion les unes par rapport aux autres dans le temps et la fréquence pour obtenir une fonction de corrélation à deux variables utilisées pour lire la largeur spectrale et la durée de l'impulsion.

7. Produit informatique **caractérisé en ce qu'**il comprend des instructions qui, une fois chargées dans le système de l'une des revendications 1 à 4, mettent en œuvre la méthode définie dans les revendications 5 à 6.
